# EUROPÄISCHE PATENTSCHRIFT

(11) **EP 2 594 464 B1**
(45) Veröffentlichungstag und Bekanntmachung des Hinweises auf die Patenterteilung: **15.10.2014**
(21) Anmeldenummer: 11009178.2
(22) Anmeldetag: 18.11.2011
(51) Int. Cl.: B62D 33/04

(54) **Verbindungsprofil für einen Kofferaufbau eines Fahrzeugs**
Connection profile for a box body of a commercial vehicle
Profil de liaison pour une structure de coffre d'un véhicule

(43) Veröffentlichungstag der Anmeldung: 22.05.2013
(73) Patentinhaber: BINZ Ambulance- und Umwelttechnik GmbH, 98693 Ilmenau (DE)
(72) Erfinder: Busam, Carsten, 77654 Offenburg (DE)
(74) Vertreter: Huwer, Andreas

(56) Entgegenhaltungen:
- WO-A1-96/15018
- WO-A1-2011/029451
- WO-A1-2011/075756
- CH-A- 392 286
- DE-U1- 9 014 345

## Beschreibung

Die Erfindung betrifft ein Verbindungsprofil für einen Kofferaufbau eines Fahrzeugs nach dem Oberbegriff des Anspruchs 1.

Ein derartiges Verbindungsprofil ist aus WO 96/15018 A1 bekannt. Es ist als geschlossenes Hohlprofil ausgestaltet, das an einer ersten Längsseite ein erstes Steckverbindungsmittel und an einer dieser abgewandeten zweiten Längsseite ein zweites Steckverbindungsmittel aufweist. Das erste Steckverbindungsmittel ist zum Verbinden mit einer Wand und das zweite Steckverbindungsmittel zum Verbinden mit einer Deckenplatte des Kofferautbaus ausgestaltet. Das erste Steckverbindungsmittel weist einen ersten inneren Schenkel und einen ersten äußeren Schenkel auf, die durch einen ersten Nutboden einstückig miteinander verbunden sind. Das zweite Steckverbindungsmittel weist einen zweiten inneren Schenkel und einen zweiten äußeren Schenkel auf, die durch einen zweiten Nutboden einstückig miteinander verbunden sind. Das Verbindungsprofil hat eine Tragwand, die sich von der Verbindungsstelle des ersten äußeren Schenkels mit dem ersten Nutboden zur Verbindungsstelle des zweiten äußeren Schenkels mit dem zweiten Nutboden erstreckt. Die Tragwand ist einstückig mit dem ersten und zweiten Steckverbindungsmittel verbunden. Das Verbindungsprofil weist einen ersten Hohlraum auf, der durch die Tragwand, den ersten Nutboden und den zweiten Nutboden begrenzt ist. Die dem ersten Hohlraum abgewandte Außenfläche der Tragwand ist von einem Eckprofil überdeckt, welches eine Außenwand aufweist, über die das erste Steckverbindungsmittel mit dem zweiten Steckverbindungsmittel verbunden ist. Zwischen der Außenwand und der Tragwand ist ein zweiter Hohlraum angeordnet. Eine Beleuchtungseinrichtung ist an dem vorbekannten Verbindungsprofil nicht vorgesehen.

Aus DE 90 14 345 U1 ist ein gattungsfremder Kastenaufbau bekannt, der an seiner Rückseite eine wannenförmige Türe aufweist, die einen Eckbereich hat, der mit einem Eckprofil abgedeckt ist. Zwischen der Türe und dem Eckprofil ist ein Hohlraum gebildet, in den verschiedene Rückleuchten des Fahrzeugs eingebaut sind.

Ein Verbindungsprofil zum Verbinden einer Seitenwand mit dem Dach eines Fahrzeuganhängers ist ferner aus US 3 196 267 bekannt. Das Verbindungsprofil ist als offenes Hohlprofil mit einem etwa U-förmigen Querschnitt und einem Hohlraum ausgestaltet. An einer ersten, in Montagestellung nach unten weisenden Längsseite hat das Verbindungsprofil eine in Längsrichtung des Verbindungsprofils verlaufende Nut, die einen oberen Randbereich der Seitenwand des Fahrzeuganhängers übergreift. Die Nut hat einen einstückig an das Verbindungsprofil angeformten inneren Schenkel, der mit der Seitenwand vernietet ist. An einer zweiten, in Montagestellung nach oben weisenden Längsseite hat das Verbindungsprofil eine Profilwand, die mit dem Dach des Fahrzeuganhängers vernietet ist. Der Hohlraum hat an der Außenseite eine oberhalb der Seitenwand angeordnete schlitzförmige Öffnung, die sich durchgängig über die gesamte Länge des Verbindungsprofils erstreckt. In dem Hohlraum sind mehrere in Erstreckungsrichtung des Verbindungsprofils voneinander beabstandete elektrische Beleuchtungseinrichtungen angeordnet, die als Begrenzungsleuchten ausgestaltet sind, welche durch die schlitztörmige Öffnung des Verbindungsprofils Licht nach außen abstrahlen. In dem Hohlraum ist außerdem ein Kabelkanal mit darin angeordneten Kabeln vorgesehen, über welche die Beleuchtungseinrichtungen mit Strom versorgt werden.

Die Montage des Verbindungsprofils ist noch vergleichsweise aufwändig, da in die Seitenwand und das Dach Durchbrüche eingebracht werden müssen, um das Verbindungsprofil mit der Seitenwand und dem Dach vernieten zu können. Ungünstig ist außerdem, dass das Verbindungsprofil nur eine relativ geringe mechanische Festigkeit aufweist und daher zum Verbinden der Seitenwände untereinander und zum Verbinden der Seitenwände mit dem Boden des Kofferaufbaus nur bedingt geeignet ist. Nachteilig ist außerdem, dass sich in dem Hohlraum und insbesondere an den Beleuchtungseinrichtungen leicht Schmutz ansammeln kann. Auch der Luftwiderstand des am Kofferaufbau montierten Verbindungsprofils und das Design des Verbindungsprofils sind noch unbefriedigend.

Es besteht deshalb die Aufgabe, ein Verbindungsprofil der eingangs genannten Art zu schaffen, das eine einfache Montage, einen optisch schönen Kofferaufbau und eine hohe mechanische Stabilität ermöglicht.

Diese Aufgabe wird mit den Merkmalen des Anspruchs 1 gelöst

In vorteilhafter Weise wird durch die Steckverbindungsmittel ein einfache Montage des Verbindungsprofils ermöglicht, bei welcher das Verbindungsprofil mit den Steckverbindungsmitteln nur auf die Ränder der miteinander zu verbundenen Wände, Decken- bzw. Bodenplatten aufgesteckt werden und dann beispielsweise mit diesen verklebt, verrastet und/oder vernietet werden kann. Die beiden durch den Hohlraum voneinander beabstandeten Tragwände ermöglichen dabei eine mechanisch stabile, biegesteife Verbindung der Wände, Decken- bzw. Bodenplatten. Da das Verbindungsprofil als geschlossenes Hohlprofil ausgestaltet ist, ist die mindestens eine Beleuchtungseinrichtung in dem Hohlraum vor Verschmutzung geschützt. Die Beleuchtungseinrichtung kann insbesondere ein Blinklicht sein, wie zB. ein Blaulicht. Die Außenwand des Verbindungsprofils schließt bevorzugt stufenlos an die Außenflächen der dazu benachbarten Wand, Decken- bzw. Bodenplatten an, was ein schönes Aussehen des Kofferaufbaus mit glatten Außenbegrenzungsflächen ermöglicht. Das Verbindungsprofil ist kostengünstig herstellbar und weist eine hohe mechanische Stabilität auf

Bei einer vorteilhaften Ausgestaltung der Erfindung ist das Verbindungsprofil als Winkelprofil ausgestaltet, bei dem das zweite Steckverbindungsmittel um 90° zum ersten Steckverbindungsmittel versetzt ist. Das Verbindungsprofil kann dann in den Eckbereichen des Kofferaufbaus eingebaut werden, um die Wände des Kofferaufbaus untereinander und/oder mit der Bodenplatte oder der Deckenplatte zu verbinden. Dabei ist es sogar möglich, dass das Verbindungsprofil an allen 12 Kanten des Kofferaufbaus zur Anwendung kommt.

Bei einer bevorzugten Ausführungsform der Erfindung ist die erste Tragwand parallel zur zweiten Tragwand angeordnet. Das Verbindungsprofil ermöglicht dann bei kompakten Abmessungen eine hohe mechanische Festigkeit. Durch den Hohlraum zwischen den Tragwänden wird der Innenraum des Kofferaufbaus thermisch gegen die Umgebung des Kofferaufbaus isoliert. Dies ist insbesondere bei klimatisierten Kofferaufbauten vorteilhaft.

Bei einer Weiterbildung der Erfindung ist das erste Steckverbindungsmittel und/oder das zweite Steckverbindungsmittel als Nut ausgestaltet. Die Nut kann dann einen Randbereich einer Wand, der Bodenplatte oder der Deckenplatte des Kofferaufbaus übergreifen. Die Platten, aus denen der Kofferaufbau hergestellt ist, können somit bei der Fertigung des Kofferaufbaus auf einfache Weise stumpf zugeschnitten werden. Die Randbereiche der Platten sind bevorzugt mit der Nut verklebt. Sie können aber auch mit den die Nut seitlich begrenzenden Schenkeln des Verbindungsprofils verrastet oder anderweitig verbunden sein.

Vorteilhaft ist, wenn die Außenwand des Verbindungsprofils in einer normal zur Längserstreckung des Verbindungsprofils angeordneten Ebene einen gekrümmten Verlauf mit einer konvexen Außenfläche aufweist oder an eine solche angenähert ist. Dabei schließt die konvexe Außenfläche bevorzugt stetig bzw. tangential an die daran angrenzende Außenfläche der benachbarten Wand, Decken- oder Bodenplatte an. Der Kofferaufbau ermöglicht dadurch ein schönes Design mit glatten bzw. stufenlosen Außenflächen. Bei Bedarf kann die konvexe Außenfläche durch mehrere gerade Teilflächen an einen gekrümmten oder kurvigen Verlauf angenähert sein.

Bei einer bevorzugten Ausführungsform der Erfindung ist der lichtdurchlässige Wandungsbereich der Außenwand lösbar mit den Steckverbindungsmitteln oder einem damit verbundenen Teilbereich der Außenwand verbunden, vorzugsweise mittels einer Nut-Federverbindung. Der lichtdurchlässige Wandungsbereich kann dann bei Bedarf demontiert werden, beispielsweise um Servicearbeiten an der dahinter befindlichen Beleuchtungseinrichtungen durchzuführen. Außerdem ist es möglich, je nach Verwendungszweck des Kofferaufbaus unterschiedliche lichtdurchlässige Wandungsbereiche mit dem Verbindungsprofil zu kombinieren. So kann beispielsweise für einen Kofferaufbau eines Krankenwagens ein blauer oder roter Wandungsbereich und für einen Kofferaufbau eines Baustellenfahrzeugs ein gelber Wandungsbereich verwendet werden.

Bei einer vorteilhaften Ausgestaltung der Erfindung ist die Außenwand oder ein Teilbereich der Außenwand entlang einer Sollbruchline vom restlichen Verbindungsprofil abtrennbar, wobei das restliche Verbindungsprofil benachbart zu der Sollbruchlinie Befestigungsstellen für den abtrennbaren Teilbereich der Außenwand oder für ein entsprechendes, vorzugsweise lichtdurchlässiges Ersatzteil aufweist. Dadurch ist es möglich für den gesamten Kofferaufbau einheitliche Verbindungsprofile zu verwenden, wobei an den Stellen, an denen Beleuchtungseinrichtungen sein sollen, Teilbereiche der Außenwand vom Verbindungsprofil abgetrennt und durch entsprechende lichtdurchlässige Teilbereiche ersetzt werden. Somit braucht bei der Herstellung von Kofferaufbauten, bei denen die Verbindungsprofile beispielsweise aus Kostengründen nur abschnittweise beleuchtet sein sollen, nur eine Art von Verbindungsprofilen bereitgestellt und bevorratet werden. Auch die Ersatzteilhaltung vereinfacht sich entsprechend.

Zweckmäßigerweise ist durch den ersten Hohlraum und/oder den zweiten Hohlraum mindestens ein mit der Beleuchtungseinrichtung verbundenes Kabel hindurchgeführt. Der Hohlraum kann also auch als Kabelkanal genutzt werden.

Bei Bedarf kann der erste Hohlraum mit einer verfestigten Schaumstoffmasse ausgeschäumt sein. Dadurch wird die Biegesteifigkeit des Verbindungsprofils verbessert.

Nachfolgend sind Ausführungsbeispiele der Erfindung anhand der Zeichnung näher erläutert. Es zeigt
- Fig. 1: ein Kraftfahrzeug mit einem Kofferaufbau,
- Fig. 2: den Kofferaufbau des Kraftfahrzeugs,
- Fig. 3: einen Querschnitt durch einen Eckbereich des Kofferaufbaus,
- Fig. 4: einen Querschnitt durch ein Verbindungsprofil, und
- Fig. 5: einen Querschnitt durch das in Fig. 4 Verbindungsprofil, nachdem ein Teilbereich der Außenwand des Verbindungsprofils herausgetrennt und durch einen lichtdurchlässigen Wandungsbereich ersetzt wurde.

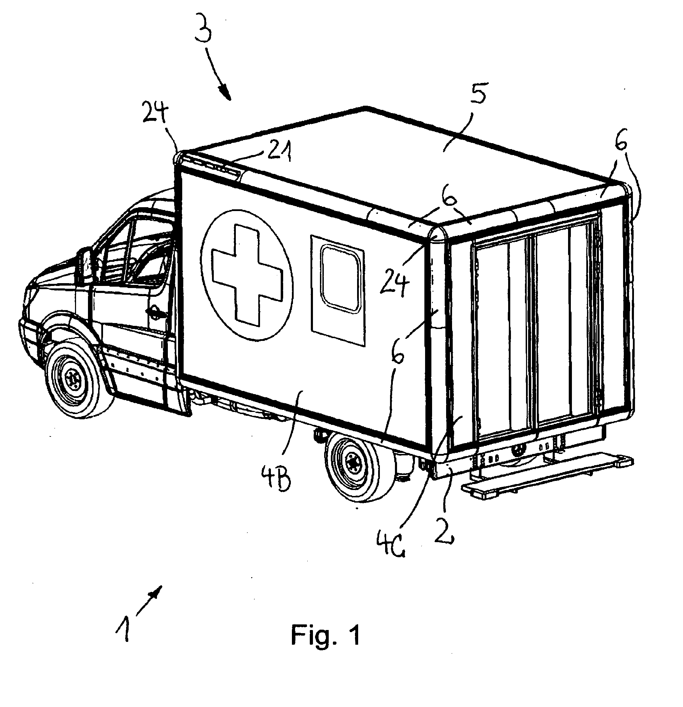

Ein in Fig. 1 im Ganzen mit 1 bezeichnetes, als Krankenwegen ausgebildetes Fahrzeug weist ein Fahrgestell 2 auf, auf dem ein Kofferaufbau 3 angeordnet ist. Der Kofferaufbau ist im Wesentlichen quaderförmig ausgestaltet und weist vier Wände 4A, 4B, 4C eine Bodenplatte und eine Deckenplatte 5 auf, die jeweils aus einem Verbundwerkstoff bestehen. Dieser hat zwei Metallplatten, zwischen denen eine nicht metallische Zwischenschicht angeordnet ist, welche die Metallplatten flächig miteinander verbindet. Die Zwischenschicht besteht bevorzugt aus einem wärmeisolierenden Werkstoff und kann insbesondere eine Hartschaumplatte oder eine Wabenstruktur sein. Die hintere Wand 4C weist eine Tür auf, durch die der Innenraum des Kofferaufbaus 3 zugänglich ist.

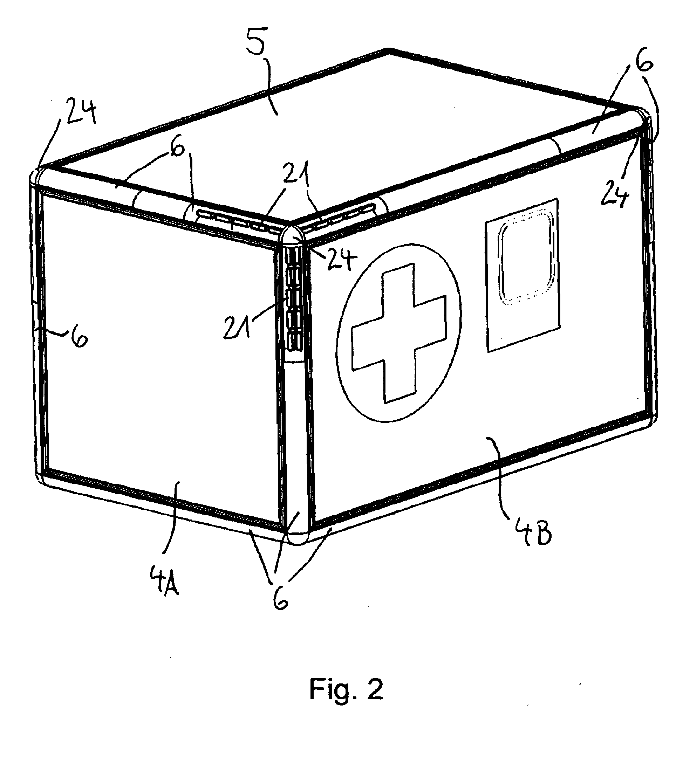

Wie in Fig. 2 besonders gut erkennbar ist, sind in den Ecken des Kofferaufbaus 3 Verbindungsprofile 6 angeordnet, welche jeweils zwei Wände 4A, 4B, 4C miteinander oder eine Wände 4A, 4B, 4C mit der Bodenplatte oder der Deckenplatte 5 verbinden.

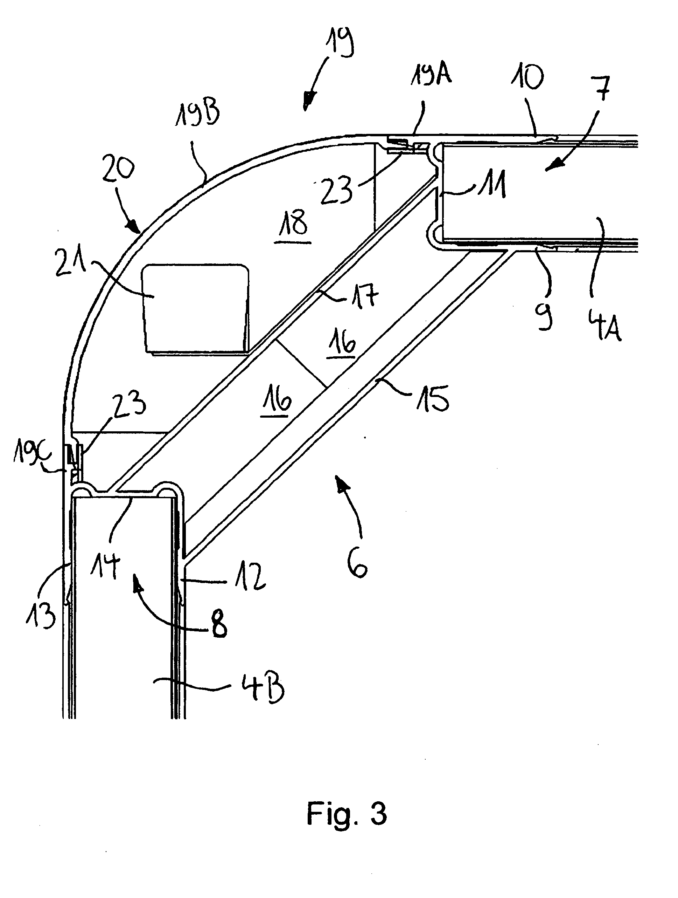

In Fig. 3 ist erkennbar, dass das Verbindungsprofil 6 als geschlossenes Hohlprofil ausgestaltet ist, das an einer ersten Längsseite ein erstes Steckverbindungsmittel 7 und an einer dieser abgewandeten zweiten Längsseite ein zweites Steckverbindungsmittel 8 aufweist Die Steckverbindungsmittel 7, 8 sind jeweils als Nuten ausgestaltet, die auf einen Randbereich der Wand 4A, 4B, 4C bzw. der Bodenplatte oder der Deckenplatte 5 aufgesteckt sind.

In Fig. 3 ist erkennbar, dass die Verbindungsprofile 6 jeweils als Winkelprofile ausgestaltet sind, bei denen das zweite Steckverbindungsmittel 8 bezüglich einer Längsachse des Verbindungsprofils 6 um 90° zum ersten Steckverbindungsmittel versetzt ist.

Das erste Steckverbindungsmittel 7 weist einen ersten inneren Schenkel 9, einen ersten äußeren Schenkel 10 und eine diese U-förmig miteinander verbindenden ersten Nutboden 11 auf. Wie in Fig. 3 erkennbar ist, übergreifen die Schenkel 9, 10 einen Randbereich einer ersten Seitenwand 4A derart, dass die einander zugewandten Innenflächen der ersten Schenkel 9, 10 flächig an einander abgewandten Oberflächenbereichen der ersten Seitenwand 4A zur Anlage kommen. Die Stirnfläche der ersten Seitenwand 4A ist gegen den ersten Nutboden 11 positioniert oder dicht zu diesem benachbart. Die ersten Schenkel 9, 10 weisen an ihren einander zugewandten Innenflächen Rastvorsprünge auf, die formschlüssig in dazu passende Rastvertiefungen der ersten Seitenwand 4A eingreifen.

Das zweite Steckverbindungsmittel 8 weist einen zweiten inneren Schenkel 12, einen zweiten äußeren Schenkel 13 und eine diese U-förmig miteinander verbindenden zweiten Nutboden 14 auf Wie in Fig. 3 gut erkennbar ist, übergreifen die Schenkel 12, 13 einen Randbereich einer quer zu der ersten Seitenwand 4A angeordneten zweiten Seitenwand 4B derart, dass die einander zugewandten Innenflächen der zweiten Schenkel 12, 13 flächig an einander abgewandten Oberflächenbereichen der zweiten Seitenwand 4B zur Anlage kommen. Die Stirnfläche der zweiten Seitenwand 4B ist gegen den zweiten Nutboden 14 positioniert oder dicht zu diesem benachbart. Die Schenkel 12, 13 weisen an ihren einander zugewandten Innenflächen Rastvorsprünge auf, die formschlüssig in dazu passende Rastvertiefungen der zweiten Seitenwand 4B eingreifen.

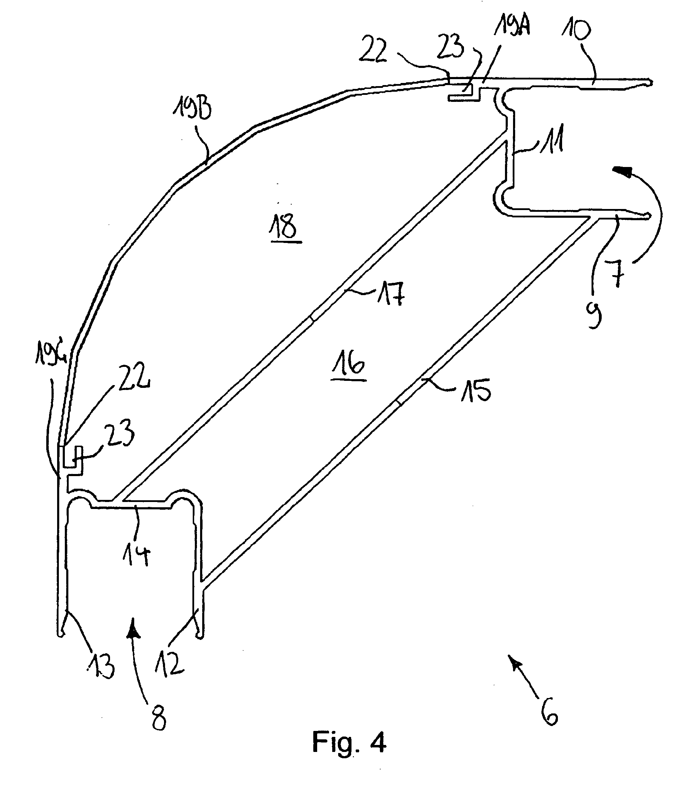

Wie in Fig. 3 und 4 besonders gut erkennbar ist, weist jedes Verbindungsprofil 6 jeweils eine ebene erste Tragwand 17 und eine parallel dazu verlaufende, durch einen ersten Hohlraum 16 von dieser beabstandete ebene zweite Tragwand 15 auf, die einstückig mit den Steckverbindungsmitteln 7, 8 verbunden sind. Die zweite Tragwand 15 ist von den Nutböden 11, 14 beabstandet und erstreckt sich von dem ersten inneren Schenkel 9 zum zweiten inneren Schenkel 12. In einer normal zur Längsachse des Verbindungsprofils 6 angeordneten, der Zeichenebene in Fig. 3 entsprechenden Ebene schließt die zweite Tragwand 15 jeweils einen Winkel von 45° mit den inneren Schenkeln 9, 12 ein.

Die erste Tragwand 1 7 ist von den inneren Schenkeln 9, 12 und den äußeren Schenkeln 10, 13 beabstandet und erstreckt sich von dem ersten Nutboden 11 zum zweiten Nutboden 14. In der normal zur Längsachse des Verbindungsprofils 6 angeordneten, der Zeichenebene in Fig. 3 entsprechenden Ebene schließt die erste Tragwand 17 jeweils einen Winkel von etwa 45° mit den Nutböden 11, 14 ein.

In Fig. 3 ist außerdem erkennbar, dass das Verbinciungsprofil 6 eine durch einen zweiten Hohlraum 18 von der ersten Tragwand 17 beabstandete Außenwand 19 aufweist, über die das erste Steckverbindungsmittel 7 mit dem zweiten Steckverbindungsmittel 8 verbunden ist. Die erste Tragwand 17 ist zwischen der zweiten Tragwand 15 und der Außenwand 19 angeordnet. Die Außenwand 19 hat einen ersten Wandungsbereich 19A, welcher einstückig mit dem ersten äußeren Schenkel 10 verbunden ist und diesen in gerader Verlängerung fortsetzt. An den ersten Wandungsbereich 19A schließt sich ein zweiter Wandungsbereich 19B an, der einen von einer geraden Linie abweichenden, an eine Zylindermantelfläche angenäherten Verlauf mit einer konvexen Außenfläche 20 hat. Der zweite Wandungsbereich 19B besteht aus einem lichtdurchlässigen, transparenten Werkstoff beispielsweise aus Polycarbonat. An den zweiten Wandungsbereich 19B schließt sich ein dritter Wandungsbereich 19C an, der in gerader Verlängerung des zweiten äußeren Schenkels 13 angeordnet und einstückig mit diesem verbunden ist.

In Fig. 3 ist erkennbar, dass in dem zweiten Hohlraum 18 hinter dem zweiten Wandungsbereich 19B eine Beleuchtungseinrichtung 21 angeordnet ist, mittels der durch den zweiten Wandungsbereich 19B hindurch Licht vom Fahrzeug abstrohlbar ist. Anhand von Fig. 1 und 2 wird deutlich, dass der Kofferaufbau 3 drei dieser Beleuchtungseinrichtungen aufweist, die in den Verbindungsprofilen 6 angeordnet sind, die an die vordere obere, an der Fahrerseite befindliche Außenecke des Kofferaufbaus 3 angrenzen.

Das in Fig. 4 gezeigte Ausführungsbeispiel entspricht im Wesentlichen dem in Fig. 3, weist jedoch zwischen dem ersten Wandungsbereich 19A und dem zweiten Wandungsbereich 19B sowie zwischen diesem und dem dritten Wandungsbereich 19C ist jeweils eine Sollbruchline 22 auf, entlang welcher der einstückig mit dem ersten Wandungsbereich 19A und dem dritten Wandungsbereich 19C verbundene zweite Wandungsbereich 19B' von der Außenwand 19 abtrennbar ist. Im Unterschied zu Fig. 3 ist der zweite Wandungsbereich 19B' bei dem Ausführungsbeispiel gemäß Fig. 4 lichtundurchlässig und kann beispielsweise aus Metall bestehen.

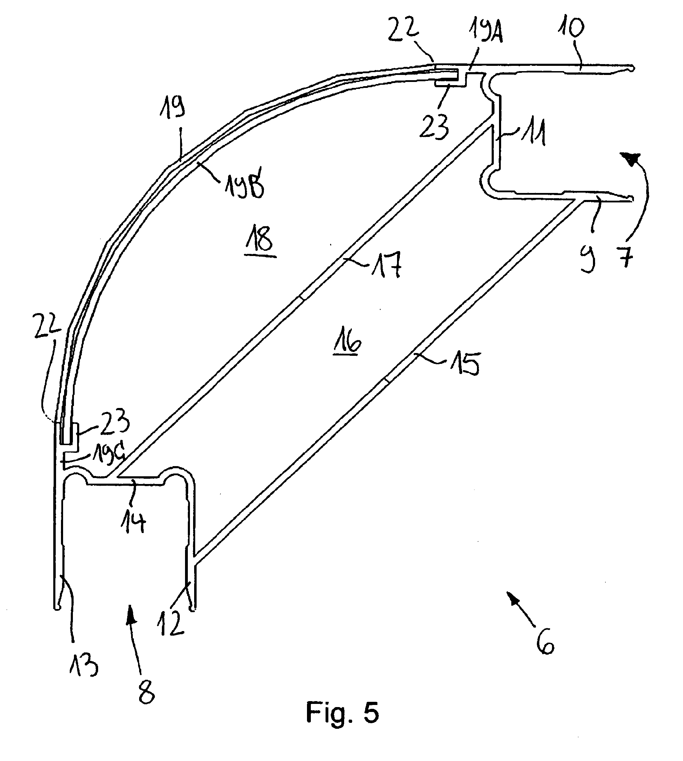

In Fig. 5 ist erkennbar, dass nach dem Heraustrennen des zweiten Wandungsbereichs 19B' aus der Außenwand 19 an dessen Stelle des herausgetrennten Teils ein lichtdurchlässiges Ersatzteil in die Außenwand 19 einsetztbar ist, welches den lichtdurchlässigen Wandungsbereich 19B bildet. Der erste Wandungsbereich 19A und der dritte Wandungsbereich 19C weisen dazu in ihrer Innenseite jeweils eine als Aufnahmenut ausgebildete Befestigungsstelle 23 auf, in die einander abgewandte Ränder des Ersatzteils formschlüssig einsetzbar sind.

Erwähnt werden soll noch, dass aneinander angrenzende Verbindungsprofile 6 an den Außenecken des Kofferaufbaus 3 durch Eckstücke 24 miteinander verbunden sind.

## Patentansprüche

1. Verbindungsprofil (6) für einen Kofferaufbau (3) eines Fahrzeugs (1), wobei das Verbindungsprofil (6) als geschlossenes Hohlprofil ausgestaltet ist, das an einer ersten Längsseite ein erstes Steckverbindungsmittel (7) und an einer dieser abgewandeten zweiten Längsseite ein zweites Steckverbindungsmittel (8) aufweist welche Steckverbindungsmittel (7, 8) jeweils zum Verbinden mit einer Wand (4A, 4B, 4C), Deckenplatte (5) und/oder Bodenplatte des Kof feraufbaus (3) ausgestaltet sind, wobei das erste Steckverbindungsmittel (7) einen ersten inneren Schenkel (9) und einen ersten äußeren Schenkel (10) aufweist, die durch einen ersten Nutboden (11) einstückig miteinander verbunden sind, wobei das zweite Steckverbindungsmittel (8) einen zweiten inneren Schenkel (12) und einen zweiten äußeren Schenkel (13) aufweist, die durch einen zweiten Nutboden (14) einstückig miteinander verbunden sind, wobei das Verbindungsprofil (6) eine sich von vom ersten Nutboden (11) zum zweiten Nutboden (14) erstreckende erste Tragwand (17) hat, welche das erste Steckverbindungsmittel (7) und das zweite Steckverbindungsmittel (8) einstückig miteinander verbindet, wobei das Verbindungsprofil (6) einen erster Hohlraum (16) und eine durch einen zweiten Hohlraum (18) von der ersten Tragwand (17) beabstandete Außenwand (19) aufweist, über die das erste Steckverbindungsmittel (7) mit dem zweiten Steckverbindungsmittel (8) verbunden ist, **dadurch gekennzeichnet, dass** das Verbindungsprofil (6) eine sich vom ersten inneren Schenkel (9) zum zweiten inneren Schenkel (12) erstreckende, von der ersten Tragwand (17) beabstandete zweite Tragwand (15) hat, die das erste Steckverbindungsmittel (7) und das zweite Steckverbindungsmittel (8) einstückig miteinander verbindet, dass der erste Hohlraum (16) zwischen der ersten Tragwand (15) und der zweiten Tragwand (17) gebildet istdass sich die Außenwand (19) vom ersten äußeren Schenkel (10) zum zweiten äußeren Schenkel (13) erstreckt, dass die Außenwand (19) zumindest einen lichtdurchlässigen Wandungsbereich (19B) aufweist und dass in dem zweiten Hohlraum (1 8) mindestens eine Beleuchtungseinrichtung (21) angeordnet ist.

2. Verbindungsprofil (6) nach Anspruch 1, **dadurch gekennzeichnet, dass** das Verbindungsprofil (6) als Winkelprofil ausgestaltet ist, bei dem das zweite Steckverbindungsmittel (8) um 90_{°} zum ersten Steckverbindungsmittel (7) versetzt ist.

3. Verbindungsprofil (6) nach Anspruch 1 oder 2, **dadurch gekennzeichnet, dass** die erste Tragwand (17) parallel zur zweiten Tragwand (15) angeordnet ist.

4. Verbindungsprofil (6) nach einem der Ansprüche 1 bis 3, **dadurch gekennzeichnet, dass** das erste Steckverbindungsmittel (7) und/oder das zweite Steckverbindungsmittel (8) als Nut ausgestaltet ist.

5. Verbindungsprofil (6) nach einem der Ansprüche 1 bis 4, **dadurch gekennzeichnet, dass** die Außenwand (19) in einer normal zur Längserstreckung des Verbindungsprofils (6) angeordneten Ebene einen gekrümmten Verlauf mit einer konvexen Außenfläche (20) aufweist oder an eine solche angenähert ist.

6. Verbindungsprofil (6) nach einem der Ansprüche 1 bis 5, **dadurch gekennzeichnet, dass** der lichtdurchlässige Wandungsbereich (19B) der Außenwand (19) lösbar mit den Steckverbindungsmitteln (7, 8) oder einem damit verbundenen Teilbereich der Außenwand (19) verbunden ist, vorzugsweise mittels einer Nut-Federverbindung.

7. Verbindungsprofil (6) nach einem der Ansprüche 1 bis 6, **dadurch gekennzeichnet, dass** die Außenwand (19) oder ein Teilbereich der Außenwand (19) entlang einer Sollbruchline (22) vom restlichen Verbindungsprofil (6) abtrennbar ist, und dass das restliche Verbindungsprofil (6) benachbart zu der Sollbruchlinie (22) Befestigungsstellen (23) für den abtrennbaren Teilbereich der Außenwand (19) oder für ein entsprechendes, vorzugsweise lichtdurchlässiges Ersatzteil aufweist.

8. Verbindungsprofil (6) nach einem der Ansprüche 1 bis 7, **dadurch gekennzeichnet, dass** durch den ersten Hohlraum (16) und/oder den zweiten Hohlraum (18) mindestens ein mit der Beleuchtungseinrichtung (21) verbundenes Kabel hindurchgeführt ist.

9. Verbindungsprofil (6) nach einem der Ansprüche 1 bis 8, **dadurch gekennzeichnet, dass** der erste Hohlraum (16) mit einer verfestigten Schaumstoff masse ausgeschäumt ist.

## Claims

1. Connection profile (6) for a box body (3) of a vehicle (1), wherein the connection profile (6) is designed as a closed hollow profile which has a first plug-in connecting means (7) on a first longitudinal side and a second plug-in connecting means (8) on a second longitudinal side facing away from said first longitudinal side, which plug-in connecting means (7, 8) are both designed for connection to a wall (4A, 4B, 4C), ceiling panel (5) and/or floor panel of the box body (3), wherein the first plug-in connecting means (7) has a first inner limb (9) and a first outer limb (10), which limbs are connected in one piece to each other by a first groove base (11), wherein the second plug-in connecting means (8) has a second inner limb (12), and a second outer limb (13), which limbs are connected in one piece to each other by a second groove base (14), wherein the connection profile (6) has a supporting wall (17) which extends from the first groove base (11) to the second groove base (14) and connects the first plug-in connecting means (7) and the second plug-in connecting means (8) in one piece to each other, wherein the connection profile (6) has a first cavity (16) and an outer wall (19) which is spaced apart from the first supporting wall (17) by a second cavity (18) and via which the first plug-in connecting means (7) is connected to the second plug-in connecting means (8), **characterized in that** the connection profile (6) has a second supporting wall (15) which extends from the first inner limb (9) to the second inner limb (12), is spaced apart from the first supporting wall (17) and connects the first plug-in connecting means (7) and the second plug-in connecting means (8) in one piece to each other, **in that** the first cavity (16) is formed between the first supporting wall (15) and the second supporting wall (17), **in that** the outer wall (19) extends from the first outer limb (10) to the second outer limb (13), **in that** the outer wall (19) has at least one light-permeable wall region (19B), and **in that** at least one illuminating device (21) is arranged in the second cavity (18).

2. Connection profile (6) according to Claim 1, **characterized in that** the connection profile (6) is designed as an angle profile in which the second plug-in connecting means (8) is offset by 90° to the first plug-in connecting means (7).

3. Connection profile (6) according to Claim 1 or 2, **characterized in that** the first supporting wall (17) is arranged parallel to the second supporting wall (15).

4. Connection profile (6) according to Claim 1 or 3, **characterized in that** the first plug-in connecting means (7) and/or the second plug-in connecting means (8) are/is designed as a groove.

5. Connection profile (6) according to one of Claims 1 to 4, **characterized in that**, in a plane arranged normally to the longitudinal extent of the connection profile (6), the outer wall (19) has a curved profile with a convex outer surface (20), or is approximate to such.

6. Connection profile (6) according to one of Claims 1 to 5, **characterized in that** the light-permeable wall region (19B) of the outer wall (19) is connected releasably to the plug-in connecting means (7, 8) or to a partial region of the outer wall (19) that is connected thereto, preferably by means of a tongue and groove connection.

7. Connection profile (6) according to , one of Claims 1 to 6, **characterized in that** the outer wall (19) or a partial region of the outer wall (19) is detachable from the rest of the connection profile (6) along a predetermined breaking line (22), and **in that** the rest of the connection profile (6) has, adjacent to the predetermined breaking line (22), fastening points (23) for the detachable partial region of the outer wall (19) or for a corresponding, preferably light-permeable replacement part.

8. Connection profile (6) according to one of Claims 1 to 7, **characterized in that** at least one cable which is connected to the illuminating device (21) is routed through the first cavity (16) and/or through the second cavity (18).

9. Connection profile (6) according to one of Claims 1 to 8, **characterized in that** the first cavity (16) is filled with a solidified foam mass.

## Revendications

1. Profilé de liaison (6) pour une carrosserie en fourgon (3) d'un véhicule (1), le profilé de liaison (6) étant configuré sous forme de profilé creux fermé qui comprend, au niveau d'un premier côté longitudinal, un premier moyen de liaison par emboîtement (7) et, au niveau d'un deuxième côté longitudinal opposé à celui-ci, un deuxième moyen de liaison par emboîtement (8), lesquels moyens de liaison par emboîtement (7, 8) sont respectivement configurés pour la liaison à une paroi (4A, 4B, 4C), une plaque de plafond (5) et/ou une plaque de plancher de la carrosserie en fourgon (3), le premier moyen de liaison par emboîtement (7) comprenant une première branche intérieure (9) et une première branche extérieure (10), lesquelles sont reliées l'une à l'autre d'un seul tenant au moyen d'un premier fond de rainure (11) le deuxième moyen de liaison par emboîtement (8) comprenant une deuxième branche intérieure (12) et une deuxième branche extérieure (13), lesquelles sont reliées l'une à l'autre d'un seul tenant au moyen d'un deuxième fond de rainure (14), le profilé de liaison (6) présentant une première paroi porteuse (17) s'étendant à partir du premier fond de rainure (11) jusqu'au deuxième fond de rainure (14), laquelle paroi porteuse relie l'un à l'autre d'un seul tenant le premier moyen de liaison par emboîtement (7) et le deuxième moyen de liaison par emboîtement (8), le profilé de liaison (6) comprenant un premier espace creux (16) et une paroi extérieure (19) espacée de la première paroi porteuse (17) par un deuxième espace creux (18), par le biais de laquelle paroi extérieure le premier moyen de liaison par emboîtement (7) est relié au deuxième moyen de liaison par emboîtement (8), **caractérisé en ce que** le profilé de liaison (6) présente une deuxième paroi porteuse (15) s'étendant à partir de la première branche intérieure (9) jusqu'à la deuxième branche intérieure (12) et espacée de la première paroi porteuse (17), laquelle deuxième paroi porteuse relie l'un à l'autre d'un seul tenant le premier moyen de liaison par emboîtement (7) et le deuxième moyen de liaison par emboîtement (8), **en ce que** le premier espace creux (16) est formé entre la première paroi porteuse (15) et la deuxième paroi porteuse (17), **en ce que** la paroi extérieure (19) s'étend à partir de la première branche extérieure (10) jusqu'à la deuxième branche extérieure (13), **en ce que** la paroi extérieure (19) comprend au moins une région de paroi (19B) translucide, et **en ce qu'**au moins un dispositif d'éclairage (21) est disposé dans le deuxième espace creux (18).

2. Profilé de liaison (6) selon la revendication 1, **caractérisé en ce que** le profilé de liaison (6) est configuré sous forme de cornière, dans laquelle le deuxième moyen de liaison par emboîtement (8) est décalé de 90° par rapport au premier moyen de liaison par emboîtement (7).

3. Profilé de liaison (6) selon la revendication 1 ou 2, **caractérisé en ce que** la première paroi porteuse (17) est disposée parallèlement à la deuxième paroi porteuse (15).

4. Profilé de liaison (6) selon l'une quelconque des revendications 1 à 3, **caractérisé en ce que** le premier moyen de liaison par emboîtement (7) et/ou le deuxième moyen de liaison par emboîtement (8) est/sont réalisé(s) sous forme de rainure(s).

5. Profilé de liaison (6) selon l'une quelconque des revendications 1 à 4, **caractérisé en ce que** la paroi extérieure (19) présente, dans un plan disposé perpendiculairement à l'étendue longitudinale du profilé de liaison (6), une allure courbe avec une surface extérieure convexe (20) ou se rapproche d'une telle surface extérieure.

6. Profilé de liaison (6) selon l'une quelconque des revendications 1 à 5, **caractérisé en ce que** la région de paroi (19B) translucide de la paroi extérieure (19) est reliée de manière amovible aux moyens de liaison par emboîtement (7, 8) ou à une région partielle de la paroi extérieure (19) reliée à ceux-ci, de préférence au moyen d'une liaison à rainure et languette.

7. Profilé de liaison (6) selon l'une quelconque des revendications 1 à 6, **caractérisé en ce que** la paroi extérieure (19) ou une région partielle de la paroi extérieure (19) peut être séparée du reste du profilé de liaison (6) le long d'une ligne destinée à la rupture (22), et **en ce que** le reste du profilé de liaison (6) comprend, à proximité de la ligne destinée à la rupture (22), des points de fixation (23) pour la région partielle séparable de la paroi extérieure (19) ou pour une pièce de rechange correspondante, de préférence translucide.

8. Profilé de liaison (6) selon l'une quelconque des revendications 1 à 7, **caractérisé en ce qu'**au moins un câble relié au dispositif d'éclairage (21) est guidé à travers le premier espace creux (16) et/ou le deuxième espace creux (18).

9. Profilé de liaison (6) selon l'une quelconque des revendications 1 à 8, **caractérisé en ce que** le premier espace creux (16) est garni d'une matière de mousse solidifiée.
